# EUROPÄISCHE PATENTSCHRIFT

(11) **EP 2 742 826 B1**
(45) Veröffentlichungstag und Bekanntmachung des Hinweises auf die Patenterteilung: **14.08.2019**
(21) Anmeldenummer: 13005804.3
(22) Anmeldetag: 13.12.2013
(51) Int. Cl.: A47B 88/00, F16B 12/20

(54) **Befestigungsvorrichtung zur Befestigung eines Bauteils, zum Beispiel einer Reling an einem zweiten Bauteil sowie Relingbefestigung für Schubladen und Schublade mit einer Relingbefestigung**
Fixing device for fixing a part, for example for a railing to a second part as well as railing fixing for drawers and drawer with a railing fixing
Dispositif de fixation pour fixer un élément, par exemple une tringle à un second élément, ainsi que fixation de tringle pour tiroir et tiroir avec une fixation de tringle

(30) Priorität: 17.12.2012 DE 202012012030 U
(43) Veröffentlichungstag der Anmeldung: 18.06.2014
(73) Patentinhaber: Grass GmbH, 6973 Höchst (AT)
(72) Erfinder: Grabher, Günter, 6972 Fußach (AT)
(74) Vertreter: Otten, Roth, Dobler & Partner mbB Patentanwälte

(56) Entgegenhaltungen:
- WO-A1-2012/092631
- AT-B- 372 164
- DE-A1- 1 811 379
- DE-B4- 19 830 740
- DE-U- 1 978 882
- DE-U1- 8 513 912
- GB-A- 2 305 226

## Beschreibung

Die Erfindung betrifft eine Befestigungsvorrichtung zur Befestigung eines ersten Bauteils, zum Beispiel einer Reling an einem zweiten Bauteil nach dem Oberbegriff des Anspruchs 1 sowie eine Relingbefestigung für Schubladen, eine Schublade mit einer Relingbefestigung sowie ein Möbel.

### Stand der Technik

Aus der DE 198 30 740 B4 ist eine Relingbefestigung für Schubladen mit einem in der Frontblende der Schublade angeordneten Spreizdübel und einem in den Dübel einführbaren Befestigungsbeschlag, der mit dem Relingrohr verbunden ist. Der Befestigungsbeschlag besitzt ein Kopfteil mit Spreizkopf, welcher in den Spreizdübel einführbar ist. Der Spreizkopf weist Führungsrippen auf, die beim Einführen des Spreizkopfes in entsprechenden Führungsnuten des Spreizdübels geführt werden, wobei der Spreizkopf nach vollständigem Einschieben durch Schwenken des Befestigungsbeschlags ein Spreizen des Spreizdübels bewirkt, was zur Verankerung des Spreizdübels führt.

Auch aus der WO 2012/092631 A1 ist eine Relingsbefestigung zur Befestigung einer Reling an einer Schubladenfront bekannt. Diese Art der Relingbefestigung ist vergleichsweise aufwändig.

### Aufgabe und Vorteile der Erfindung

Der Erfindung liegt die Aufgabe zugrunde, insbesondere eine Relingbefestigung der eingangs genannten Art zu vereinfachen.

Diese Aufgabe wird durch die Merkmale des Anspruchs 1 gelöst.

In den abhängigen Ansprüchen sind vorteilhafte und zweckmäßige Weiterbildungen der Erfindung genannt.

Die Erfindung geht von einer Befestigungsvorrichtung zur Befestigung eines ersten Bauteils, zum Beispiel einer Reling an einem zweiten Bauteil, zum Beispiel an der Frontblende einer Schublade mit einem Dübelelement aus. Der Kern der Erfindung liegt darin, dass das Dübelelement einen Dübelabschnitt und einen Verankerungsabschnitt aufweist, wobei der Verankerungsabschnitt zum Einsetzen in eine vorgegebene Öffnung des zweiten Bauteils ausgestaltet ist und durch Drehen des ersten Bauteils zusammen mit dem Verankerungsabschnitt um einen vorgegebenen Winkel im zweiten Bauteil verankerbar ist, wobei am Verankerungsabschnitt Schneidmittel angebracht sind, sodass eine Verankerung des Verankerungsabschnitts im zweiten Bauteil durch einen Einschneidvorgang erfolgt, wobei der Dübelabschnitt als ein Schneiddübelabschnitt ausgebildet ist. Die Öffnung ist zum Beispiel eine einfache Bohrung im zweiten Bauteil mit vorgegebenem Durchmesser. Durch diese Ausgestaltung ist nur ein einziges Befestigungselement erforderlich, um zum Beispiel eine Reling an einer Schubladenfront auf der Innenseite anzubringen. Eine solche Befestigung ist denkbar einfach. Der Dübelabschnitt ist als Schneiddübelabschnitt ausgebildet, sodass die Möglichkeit besteht, den Schneiddübelabschnitt einfach in ein Relingrohr zur Befestigung einzuschlagen.

In einer weiteren bevorzugten Ausführungsform der Erfindung ist der Verankerungsabschnitt auf eine vorgegebene Öffnung derart abgestimmt, dass eine Drehung des am ersten Bauteils angebrachten Verankerungsabschnitts um einen vorgegebenen Winkel eine Verankerung des Verankerungsabschnitts im zweiten Bauteil und gleichzeitig ein Aneinanderziehen des Verankerungsabschnitts und des zweiten Bauteils bewirkt. Die Drehung des ersten Bauteils mit Verankerungsabschnitt beträgt vorzugsweise weniger als 360° liegt z.B. in einem Wertebereich von 90 bis 360°, um eine feste Verankerung mit satt aneinander liegenden Bauteilen zu erhalten. Vorteilhafterweise beträgt der Winkel ca. 90°. Die Befestigungsvorrichtung kann jedoch auch so ausgebildet sein, dass ein Winkel von < 90° z. B. 60° ausreicht, um die feste Verbindung zu bewirken.

In einer überdies vorteilhaften Ausgestaltung der Erfindung ist der Verankerungsabschnitt auf eine vorgegebene Öffnung im zweiten Bauteil derart abgestimmt, dass eine Drehung des am ersten Bauteil angebrachten Verankerungsabschnitts um ca. 90° ein Aneinanderziehen des Verankerungsabschnitts und des zweiten Bauteils bewirkt. Denkbar ist auch hier, dass das Aneinanderziehen sich vollständig erst bei einem größeren Winkel von bis 360° einstellt. Andererseits kann eine Ausgestaltung des Verankerungsabschnitts auch so realisiert sein, dass ein Winkel von < 90°, zum Beispiel bereits 60° ausreicht, um ein sattes Aneinanderziehen der Bauteile zu gewährleisten.

In einer weiteren vorteilhaften Ausführungsform der Erfindung weist der Verankerungsabschnitt eine Längsachse auf, wobei der Verankerungsabschnitt auf eine Öffnung im zweiten Bauteil derart abgestimmt ist, dass nach dem Einsetzen des Verankerungsabschnitts in die Öffnung die Längsachse des Verankerungsabschnitts und eine Längsachse der Öffnung im Winkel zueinander stehen und sich durch Verschwenken, das die Verankerung vom Verankerungsabschnitt in der Öffnung bewirkt, parallel zueinander ausrichten und erst durch eine Drehung des ersten Bauteils ein Aneinanderziehen des Verankerungsabschnitts relativ zum zweiten Bauteil bewirkt. Die Verankerung wird somit durch ein schräges Ansetzen mit Verschwenken und zusätzlicher Drehung, also einer Schwenk-Drehbewegung hergestellt.

Die Verankerung im zweiten Bauteil erfolgt durch einen Einschneidvorgang von Schneidmitteln, die am Verankerungsabschnitt angebracht sind, ins Material des zweiten Bauteils.

Grundsätzlich reicht für die Verankerung eine einfache Bohrung zum Beispiel in einer Frontblende aus. Denkbar ist jedoch auch, dass die Öffnung im zweiten Bauteil in Form einer Öffnung einer Aufnahmehülse ausgestaltet ist, auf welche der Verankerungsabschnitt abgestimmt und die in das zweite Bauteil eingesetzt ist. Dies ist insbesondere dann von Vorteil, wenn die Frontblende aus einem Material besteht, in welches sich der Verankerungsabschnitt nur schwer oder gar nicht einschneiden kann, zum Beispiel aus Metall oder Stein.

Darüber hinaus ist es vorteilhaft, wenn die Aufnahmehülse Fixierabschnitte zur Fixierung der Aufnahmehülse im zweiten Bauteil besitzt. Dies können eine Art von Längs- oder Querfinnen sein, um zum Beispiel im spröden Material, aber auch in einem weichen Holzwerkstoff einen notwendigen Halt zu finden.

### Zeichnungen

Mehrere Ausführungsbeispiele der Erfindung sind in den Zeichnungen dargestellt und werden unter Angabe weiterer Einzelheiten und Vorteilen nachstehend näher erläutert. Es zeigen:
- Figur 1: ein Schnittbild eines Ausschnitts einer Schublade mit Reling,
- Figur 2a bis 2c: in drei dreidimensionalen Abbildungen eines Ausschnitts einer Schublade den Anbringvorgang einer Reling an einer Schubladenfrontinnenseite.

### Beschreibung der Ausführungsbeispiele

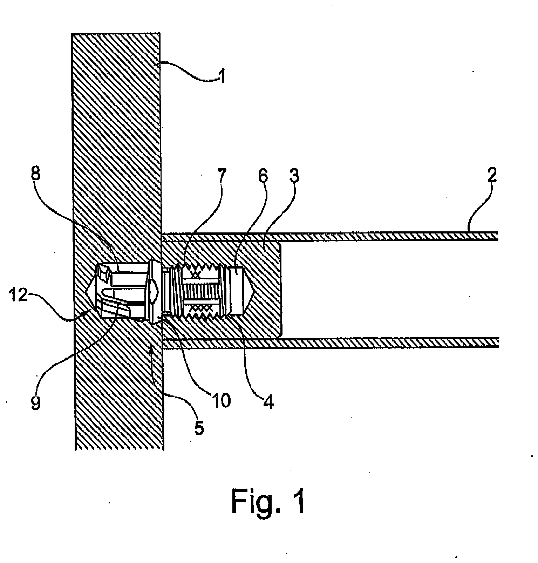

In Figur 1 ist im Querschnitt ein Ausschnitt einer Schubladenfront 1 mit daran angebrachter Reling 2 abgebildet. Die Reling ist zum Beispiel als Rohr ausgebildet, in dessen schubladenfrontseitigem Ende ein Materialabschnitt 3 innerhalb des Rohrprofils vorgesehen ist. Im Materialabschnitt 3 sitzt ein Dübelabschnitt 4 einer Befestigungsvorrichtung 5. Zur Befestigung des Dübelabschnitts 4 im Materialabschnitt 3 wurde zum Beispiel in den Materialabschnitt 3 eine Bohrung 6 eingebracht und anschließend der Dübelabschnitt 4 eingeschlagen oder eingedreht. Hierzu ist der Dübelabschnitt 4 als Schneiddübel ausgebildet mit Schneidrippen 7. Außerhalb der Reling 2 und in Figur 1 in das Material der Schubladenfront sich erstreckend ist ein Verankerungsabschnitt 8 zu sehen. Die Befestigungsvorrichtung 5 ist in Figur 1 sowohl was den Verankerungsabschnitt 8 als auch den Dübelabschnitt 4 betrifft, nicht geschnitten. Der Verankerungsabschnitt 8 wurde zum Beispiel durch eine Schwenk-Drehbewegung in einer Bohrung 12 der Schubladenfront 1 an einer Innenseite 1a der Schubladenfront 1 verankert, was gleichzeitig ein sattes Heranziehen der Reling 2 an die Schubladenfront 1 bewirkt hat.

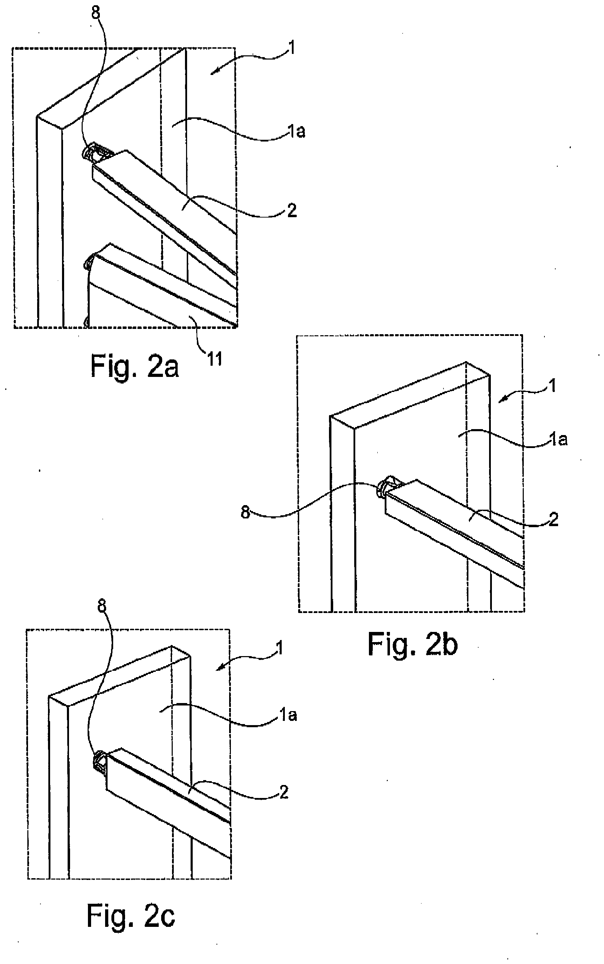

Dieser Vorgang wird nachstehend anhand der Figuren 2a bis 2c erläutert. Der Verankerungsabschnitt 8 hat Schneiden 9 und einen Anlagekragen 10, mit welchen die Verankerung in einer Bohrung 12 ermöglicht ist.

In den Figuren 2a bis 2c ist die Schubladenfront 1 und die Reling 2 jeweils in unterschiedlichen Montagezuständen ersichtlich. Die Schubladenfront 1 ist dabei "durchsichtig" dargestellt, sodass der darin eingesteckte Verankerungsabschnitt 8 in allen Positionen auch in einer verankerten Position sichtbar bleibt.

In Figur 2a ist zusätzlich ein Abschnitt einer Schubladenzarge 11 zu sehen. Die Reling mit der Befestigungsvorrichtung 5, von welcher der Verankerungsabschnitt 8 aus der Reling vorne heraussteht, wird schräg in ein vorbereitetes Loch in der Innenseite la der Schubladenfront 1 eingesteckt (Figur 2a) und durch ein senkrechtes Ausrichten der Reling 2 zur Oberfläche der Innenseite 1a der Schubladenfront 1 eingeschnitten (Figur 2b). Anschließend wird die Reling um ca. 90° gedreht, wodurch sich die Schubladenfront 1 und die Reling 2 eng aneinander ziehen und somit fest miteinander verbunden sind (siehe Figur 2c). Daraufhin kann die Reling z.B. an einer Rückwand montiert werden (nicht dargestellt).

### Bezugszeichenliste:

- 1: Schubladenfront
- 1a: Innenseite
- 2: Reling
- 3: Materialabschnitt
- 4: Dübelabschnitt
- 5: Befestigungsvorrichtung
- 6: Bohrung
- 7: Schneidrippen
- 8: Verankerungsabschnitt
- 9: Schneide
- 10: Anlagekragen
- 11: Schubladenzarge
- 12: Bohrung

## Patentansprüche

1. Schublade mit einer Relingbefestigung mit einer Befestigungsvorrichtung zur Befestigung eines ersten Bauteils (2) an einem zweiten Bauteil (1) mit einem Dübelelement (5), wobei das Dübelelement (5) einen Dübelabschnitt (4) und einen Verankerungsabschnitt (8) aufweist, wobei der Verankerungsabschnitt (8) zum Einsetzen in eine vorgegebene Öffnung (12) des zweiten Bauteils (1) ausgestaltet ist und durch Drehen des ersten Bauteils (2), zusammen mit dem Verankerungsabschnitt (8) um einen vorgegebenen Winkel im zweiten Bauteil (1) verankert ist, **dadurch gekennzeichnet, dass** am Verankerungsabschnitt (8) Schneidmittel angebracht sind, sodass eine Verankerung des Verankerungsabschnitts (8) im zweiten Bauteil (1) durch einen Einschneidvorgang erfolgt, wobei der Dübelabschnitt (4) als ein Schneiddübelabschnitt ausgebildet ist.

2. Schublade mit einer Relingbefestigung mit einer Befestigungsvorrichtung nach Anspruch 1, **dadurch gekennzeichnet, dass** der Verankerungsabschnitt (8) auf die vorgegebene Öffnung (12) derart abgestimmt ist, dass eine Drehung des am ersten Bauteil (2) angebrachten Verankerungsabschnitts (8) um einen vorgegebenen Winkel eine Verankerung des Verankerungsabschnitts (8) im zweiten Bauteil (1) und gleichzeitig ein Aneinanderziehen des Verankerungsabschnitts (8) und des zweiten Bauteils (1) bewirkt.

3. Schublade mit einer Relingbefestigung mit einer Befestigungsvorrichtung nach einem der vorhergehenden Ansprüche, **dadurch gekennzeichnet, dass** der Verankerungsabschnitt (8) auf die vorgegebene Öffnung (12) im zweiten Bauteil derart abgestimmt ist, dass eine Drehung des am ersten Bauteil angebrachten Verankerungsabschnitts (8) um ca. 90° eine Verankerung des Verankerungsabschnitts (8) in der Öffnung (12) bewirkt.

4. Schublade mit einer Relingbefestigung mit einer Befestigungsvorrichtung nach einem der vorhergehenden Ansprüche, **dadurch gekennzeichnet, dass** der Verankerungsabschnitt (8) auf die vorgegebene Öffnung (12) im zweiten Bauteil (1) derart abgestimmt ist, dass eine Drehung des am ersten Bauteil (2) angebrachten Verankerungsabschnitts (8) um ca. 90° ein Aneinanderziehen des Verankerungsabschnitts (8) und des zweiten Bauteils (1) bewirkt.

5. Schublade mit einer Relingbefestigung mit einer Befestigungsvorrichtung nach einem der vorhergehenden Ansprüche, **dadurch gekennzeichnet, dass** der Verankerungsabschnitt (8) eine Längsachse aufweist, wobei der Verankerungsabschnitt (8) auf die Öffnung (12) im zweiten Bauteil (1) derart abgestimmt ist, dass nach dem Einsetzen des Verankerungsabschnitts (8) in die Öffnung (12) die Längsachse des Verankerungsabschnitts (8) und eine Längsachse der Öffnung (12) im Winkel zueinander stehen und sich durch Verschwenken, das die Verankerung vom Verankerungsabschnitt (8) in der Öffnung (12) bewirkt, parallel zueinander ausrichten und erst durch eine Drehung des ersten Bauteils (2) ein Aneinanderziehen des Verankerungsabschnitts (8) relativ zum zweiten Bauteil (1) bewirkt.

6. Schublade mit einer Relingbefestigung mit einer Befestigungsvorrichtung nach einem der vorhergehenden Ansprüche, **dadurch gekennzeichnet, dass** die Öffnung (12) im zweiten Bauteil (1) in Form einer Öffnung einer Aufnahmehülse ausgestaltet ist, auf welche der Verankerungsabschnitt (8) abgestimmt ist.

7. Schublade mit einer Relingbefestigung mit einer Befestigungsvorrichtung nach einem der vorhergehenden Ansprüche, **dadurch gekennzeichnet, dass** die Aufnahmehülse Fixierabschnitte zur Fixierung der Aufnahmehülse im zweiten Bauteil besitzt.

## Claims

1. Drawer with a railing fixing with a fixing device for fixing a first component (2) onto a second component (1) by means of a dowel element (5), wherein the dowel element (5) has a dowel section (4) and an anchoring section (8), wherein the anchoring section (8) is designed for inserting into a predefined opening (12) of the second component (1) and by rotating the first component (2) is anchored together with the anchoring section (8) about a predefined angle in the second component (1), **characterised in that** on the anchoring section (8) cutting means are attached so that the anchoring section (8) is anchored in the second component (1) by means of a cutting in process, wherein the dowel section (4) is designed as a cutting dowel section.

2. Drawer with a railing fixing with a fixing device according to claim 1, **characterised in that** the anchoring section (8) is matched to the predefined opening (12) such that a rotation of the anchoring section (8) attached onto the first component (2) about a predefined angle anchors the anchoring section (8) in the second component (1) and at the same time draws together the anchoring section (8) and the second component (1).

3. Drawer with a railing fixing with a fixing device according to any of the preceding claims, **characterised in that** the anchoring section (8) is matched to the predefined opening (12) in the second component such that a rotation of the anchoring section (8) attached onto the first component by about 90° anchors the anchoring section (8) in the opening (12).

4. Drawer with a railing fixing with a fixing device according to any of the preceding claims, **characterised in that** the anchoring section (8) is matched to the predefined opening (12) in the second component (1) such that a rotation of the anchoring section (8) attached to the first component (2) by about 90° draws together the anchoring section (8) and the second component (1).

5. Drawer with a railing fixing with a fixing device according to any of the preceding claims, **characterised in that** the anchoring section (8) has a longitudinal axis, wherein the anchoring section (8) is matched to an opening (12) in the second component (1) such that after the insertion of the anchoring section (8) into the opening (12) the longitudinal axis of the anchoring section (8) and a longitudinal axis of the opening (12) are at an angle to one another and by means of pivoting, which anchors the anchoring section (8) in the opening (12), are aligned to be parallel to one another and only by rotation of the first component (2) draws together the anchoring section (8) relative to the second component (1).

6. Drawer with a railing fixing with a fixing device according to any of the preceding claims, **characterised in that** the opening (12) in the second component (1) is designed in the form of an opening (12) of a receiving sleeve, to which the anchoring section (8) is matched.

7. Drawer with a railing fixing with a fixing device according to any of the preceding claims, **characterised in that** the receiving sleeve has fixing sections for fixing the receiving sleeve in the second component.

## Revendications

1. Tiroir comportant une fixation de barre avec un dispositif de fixation pour fixer un premier composant (2) à un deuxième composant (1) avec un élément de cheville (5), l'élément de cheville (5) comportant une section de cheville (4) et une section d'ancrage (8), la section d'ancrage (8) étant conçue pour être insérée dans une ouverture prédéterminée (12) du deuxième composant (1) et étant ancrée dans le deuxième composant (1) par rotation selon un angle prédéterminé du premier composant (2) avec la section d'ancrage (8), **caractérisé en ce que** des moyens d'entaillage sont prévus sur la section d'ancrage (8) de sorte qu'un ancrage de la section d'ancrage (8) dans le deuxième composant (1) est réalisé par une opération d'entaillage, la section de cheville (4) étant formée comme une section de cheville d'entaillage.

2. Tiroir comportant une fixation de barre avec un dispositif de fixation selon la revendication 1, **caractérisé en ce que** la section d'ancrage (8) est adaptée à l'ouverture prédéterminée (12) de telle sorte qu'une rotation d'un angle prédéterminé de la section d'ancrage (8) insérée dans le premier composant (2) provoque un ancrage de la section d'ancrage (8) dans le deuxième composant (1) et en même temps une traction l'un vers l'autre de la section d'ancrage (8) et du deuxième composant (1).

3. Tiroir comportant une fixation de barre avec un dispositif de fixation selon l'une des revendications précédentes, **caractérisé en ce que** la section d'ancrage (8) est adaptée à l'ouverture prédéterminée (12) du deuxième composant de telle sorte qu'une rotation d'environ 90° de la section d'ancrage (8) insérée dans le premier composant provoque un ancrage de la section d'ancrage (8) dans l'ouverture (12).

4. Tiroir comportant une fixation de barre avec un dispositif de fixation selon l'une des revendications précédentes, **caractérisé en ce que** la section d'ancrage (8) est adaptée à l'ouverture prédéterminée (12) du deuxième composant (1) de telle sorte qu'une rotation d'environ 90° de la section d'ancrage (8) insérée dans le premier composant (2) provoque une traction l'un vers l'autre de la section d'ancrage (8) et du deuxième composant (1).

5. Tiroir comportant une fixation de barre avec un dispositif de fixation selon l'une des revendications précédentes, **caractérisé en ce que** la section d'ancrage (8) présente un axe longitudinal, la section d'ancrage (8) étant adaptée à l'ouverture (12) du deuxième composant (1) de sorte que, après l'insertion de la section d'ancrage (8) dans l'ouverture (12), l'axe longitudinal de la section d'ancrage (8) et un axe longitudinal de l'ouverture (12) forment un angle l'un par rapport à l'autre et sont alignés parallèlement l'un à l'autre par un pivotement qui provoque l'ancrage de la section d'ancrage (8) dans l'ouverture (12), et seule une rotation du premier composant (2) provoque la traction l'un vers l'autre de la section d'ancrage (8) par rapport au deuxième composant (1).

6. Tiroir comportant une fixation de barre avec un dispositif de fixation selon l'une des revendications précédentes, **caractérisé en ce que** l'ouverture (12) du deuxième composant (1) se présente sous la forme d'une ouverture d'une douille de réception à laquelle est adaptée la section d'ancrage (8).

7. Tiroir comportant une fixation de barre avec un dispositif de fixation selon l'une des revendications précédentes, **caractérisé en ce que** la douille de réception possède des sections de fixation pour fixer la douille de réception dans le deuxième composant.
